# EUROPÄISCHE PATENTSCHRIFT

(11) **EP 1 421 983 B1**
(45) Veröffentlichungstag und Bekanntmachung des Hinweises auf die Patenterteilung: **23.11.2005**
(21) Anmeldenummer: 03104085.0
(22) Anmeldetag: 05.11.2003
(51) Int. Cl.: B01D 29/62, B01D 35/30, B28D 1/14

(54) **Transportabler Bohrwasserfilter mit Selbstreinigung**
Portable self-cleaning filter for drilling water
Dispositif filtre portable et autonettoyant pour des eaux de forage

(30) Priorität: 09.11.2002 DE 10252194
(43) Veröffentlichungstag der Anmeldung: 26.05.2004
(73) Patentinhaber: HILTI Aktiengesellschaft, 9494 Schaan (LI)
(72) Erfinder: Streicher, Harald, 86932, Pürgen-Stoffen (DE); Wenzl, Franz, 86159, Augsburg (DE); Ostermeier, Peter, 86911, Diessen (DE)
(74) Vertreter: Wildi, Roland

(56) Entgegenhaltungen:
- DE-A- 3 545 328
- DE-A- 19 810 912
- GB-A- 148 993
- US-A- 1 130 725

## Beschreibung

Die Erfindung bezeichnet einen transportablen Bohrwasserfilter mit Selbstreinigung.

Nach der DE20110244U1 nehmen Bohrwasserpumpen stark mit Feststoffen versetztes Bohrwasser bei niedrigem Druck auf und stellen an separaten Ausgängen sowohl gefiltertes Bohrwasser als auch mit Feststoffen aufkonzentriertes Bohrwasser unter höheren Drücken zur Verfügung. Durch den starken Feststoffanteil im Bohrwasser ist eine regelmässige Rückspülung des Bohrwasserfilters erforderlich, um eine dauerhafte Zusetzung dessen zu vermeiden.

Nach der DE19723798 weist ein rückspülbarer zylinderförmiger Keramikfiltereinsatz am äusseren Zylindermantel eine koaxial drehbare Bürste mit nach innen orientierten Borsten zur mechanischen Abreinigung auf, welche direkt vom durchströmenden Bohrwasser oder von einem separaten Motor angetrieben wird. Der Drehantrieb durch das durchströmende Bohrwasser ist für stark mit Feststoffen verunreinigte Bohrwasser zu leistungsschwach, ein separater Motor hingegen technologisch aufwendig.

Die Aufgabe der Erfindung besteht in der technologisch einfachen Realisierung eines transportablen Bohrwasserfilters mit einer automatischen Selbstreinigung.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist ein Bohrwasserfilter in einem Filterbehälter mit einem Deckel einen, im Strömungszweig zwischen einem Einlass und einem Auslass, einsetzbaren Filtereinsatz zur Abtrennung von Feststoffen aus der Flüssigkeit auf, wobei der Deckel für den Transport des Bohrwasserfilters einen versetzbaren Tragegriff aufweist, der mit zumindest einem Selbstreinigungsmittel steuerbar verbunden ist.

Durch den mit Selbstreinigungsmitteln steuerbar verbunden, versetzbaren Tragegriff wird beim Umsetzen des Bohrwasserfilters die Selbstreinigung bewirkt, wodurch dies im rauhen Baugewerbe in diskontinuierlichen Abständen zwangsläufig automatisch geschieht.

Vorteilhaft ist der Tragegriff vom Schwerpunkt des Bohrwasserfilters wegschwenkbar, wodurch beim Umsetzen des Bohrwasserfilters die Schwerkraft die Selbstreinigung auslöst.

Vorteilhaft ist der Tragegriff als drehschwenkbarer Bügelgriff ausgebildet, wodurch an der Tragegriffachse eine Drehversetzung abgreifbar ist.

Vorteilhaft ist mit der Tragegriffachse ein Steuermittel drehfest verbunden, welches mit zumindest einem Selbstreinigungsmittel steuerbar verbunden ist, wodurch die Steuerinformation im Bereich des Deckels vorliegt.

Vorteilhaft ist in dem Steuermittel ein Permanentmagnet angeordnet, dessen benachbart zugeordneter Hall-Sensor über ein elektrisch steuerbares Rückspülventil eine Rückspülung des Filtereinsatzes mit Flüssigkeit aus einer druckvorgespannten Rückspülkammer bewirkt, wodurch die Steuerinformation zur Rückspülung berührungslos abgreifbar ist.

Vorteilhaft weist das Steuermittel ein Antriebsmittel auf, weiter vorteilhaft in Form eines federnd vorgespannten Rastmechanismus, welcher in umfängliche Rastausnehmungen eines drehversetzbaren Abreinigungsmittels mechanisch drehversetzend eingreift, wodurch die mechanische Abreinigung direkt mechanisch bewirkt wird.

Vorteilhaft ist das Abreinigungsmittel als am äusseren Zylindermantel des Filtereinsatzes koaxial drehbare Bürste mit nach innen orientierten Borsten ausgebildet, wodurch Feststoffe am Filtereinsatz effizient entfernbar sind.

Vorteilhaft wird beim Umsetzen des Bohrwasserfilters der Tragegriff schrittweise versetzt, wobei in einem ersten Schritt eine mechanische Abreinigung bewirkt wird und in einem nachgeordneten zweiten Schritt eine Rückspülung bewirkt wird, wodurch eine effiziente Selbstreinigung erfolgt.

Die Erfindung wird bezüglich eines vorteilhaften Ausführungsbeispiels näher erläutert mit:
- Fig. 1: als tragbaren Bohrwasserfilter. In Seitenansicht; und
- Fig. 2: die Innenansicht des Bohrwasserfilters, im Schnitt sowie in Partialschnitten.

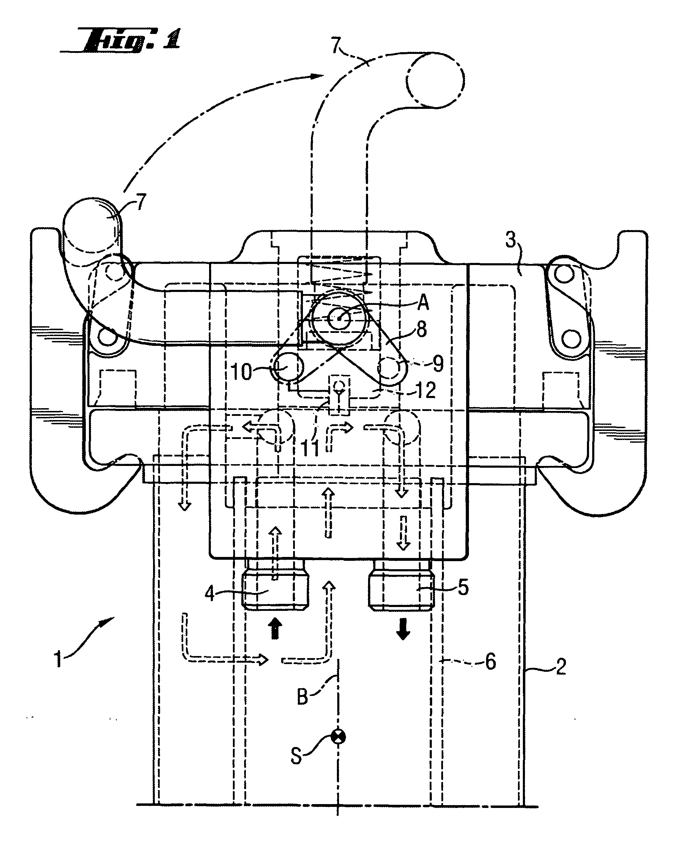

Nach Fig. 1 weist ein Bohrwasserfilter 1 in einem Filterbehälter 2 mit einem Deckel 3 einen, im Strömungszweig zwischen einem Einlass 4 und einem Auslass 5, einsetzbaren Filtereinsatz 6 zur Abtrennung von Feststoffen aus der Flüssigkeit auf, wobei der Deckel 3 für den Transport des Bohrwasserfilters 1 einen versetzbaren, als drehschwenkbaren Bügelgriff ausgebildeten Tragegriff 7 aufweist, welcher vom Schwerpunkt S des Bohrwasserfilters 1 wegschwenkbar ist. Mit der Tragegriffachse A ist ein Steuermittel 8 drehfest verbunden, in welchem ein Permanentmagnet 9 angeordnet ist, dem benachbart ein Hall-Sensor 10 zugeordnet ist, der über ein elektrisch steuerbares Rückspülventil 11 eine Rückspülung des Filtereinsatzes 6 mit Flüssigkeit aus einer druckvorgespannten Rückspülkammer 12 bewirkt.

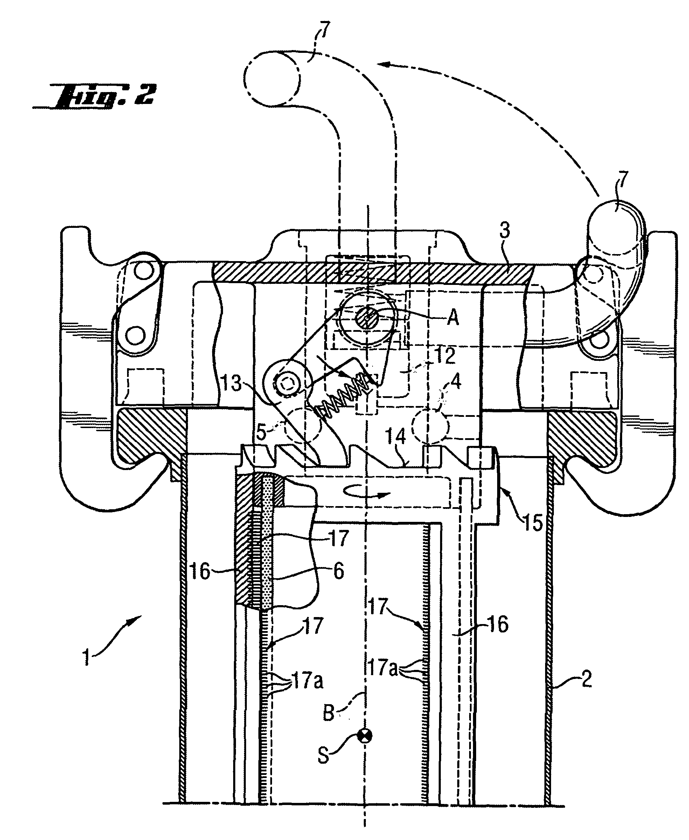

Nach Fig. 2 weist im Innern des Deckel 3 das Steuermittel 8 zudem ein Antriebsmittel 13 in Form eines federnd vorgespannten Rastmechanismus auf, welcher in umfängliche Rastausnehmungen 14 eines um die Filtereinsatzachse B schrittweise drehversetzbaren Abreinigungsmittels 15 mechanisch drehversetzend eingreift, welches als am äusseren Zylindermantel des Filtereinsatzes 6 koaxial drehbare Bürste 17 mit drei um 120° umfänglich versetzten Borstenträgern 16 mit nach innen orientierten Borsten 17a ausgebildet ist.

## Patentansprüche

1. Bohrwasserfilter mit einem Filterbehälter (2), einem Deckel (3) und einem, im Strömungszweig zwischen einem Einlass (4) und einem Auslass (5), einsetzbaren Filtereinsatz (6) zur Abtrennung von Feststoffen aus der Flüssigkeit, **dadurch gekennzeichnet, dass** für den Transport des Bohrwasserfilters der Deckel (3) einen versetzbaren Tragegriff (7) aufweist, der mit zumindest einem Selbstreinigungsmittel steuerbar verbunden ist.

2. Bohrwasserfilter nach Anspruch 1, **dadurch gekennzeichnet, dass** der Tragegriff (3) vom Schwerpunkt (S) wegschwenkbar ist.

3. Bohrwasserfilter nach Anspruch 2, **dadurch gekennzeichnet, dass** der Tragegriff (3) als drehschwenkbarer Bügelgriff ausgebildet ist.

4. Bohrwasserfilter nach einem der Ansprüche 1 bis 3, **dadurch gekennzeichnet, dass** ein Steuermittel (8) mit einer drehversetzbaren Tragegriffachse (A) drehfest verbunden ist, welches mit zumindest einem Selbstreinigungsmittel steuerbar verbunden sind.

5. Bohrwasserfilter nach Anspruch 4, **dadurch gekennzeichnet, dass** in dem Steuermittel (8) ein Permanentmagnet (9) angeordnet ist, dessen steuerbar zugeordneter Hall-Sensor (10) über ein elektrisch steuerbares Rückspülventil (11) eine Rückspülung des Filtereinsatzes (6) mit Flüssigkeit aus einer druckvorgespannten Rückspülkammer (12) bewirkt.

6. Bohrwasserfilter nach einem der Ansprüche 1 bis 5, **dadurch gekennzeichnet, dass** das Steuermittel (8) ein Antriebsmittel (13) aufweist, welches ein Abreinigungsmittel (15) mechanisch antreibt.

7. Bohrwasserfilter nach Anspruch 6, **dadurch gekennzeichnet, dass** das Antriebsmittel (13) ein federnd vorgespannter Rastmechanismus ist, welcher in umfängliche Rastausnehmungen (14) des Abreinigungsmittels (15) mechanisch drehversetzend eingreift.

8. Bohrwasserfilter nach Anspruch 4, **dadurch gekennzeichnet, dass** das Abreinigungsmittel (15) als am äusseren Zylindermantel des Filtereinsatzes (6) koaxial drehbare Bürste (17) mit nach innen orientierten Borsten (17a) ausgebildet ist.

9. Verfahren zur Selbstreinigung eines transportablen Bohrwasserfilters (1), **dadurch gekennzeichnet, dass** beim Umsetzen des Bohrwasserfilters (1) der Tragegriff (3) schrittweise versetzt wird, wobei in einem ersten Schritt eine mechanische Abreinigung bewirkt wird und in einem nachgeordneten zweiten Schritt eine Rückspülung bewirkt wird.

## Claims

1. Drilling-water filter comprising a filter container (2), a cover (3) and a filter insert (6) insertible in a flow branch between an inlet (4) and an outlet (5) for separating solids from the liquid, **characterised in that** the cover (3) comprises a transposable carrying handle (7) which is controllably connected to at least one self-cleaning means for the purpose of transporting the drilling-water filter.

2. Drilling-water filter according to Claim 1, **characterised in that** the carrying handle (3) can be pivoted away from the centre of gravity (S).

3. Drilling-water filter according to Claim 2, **characterised in that** the carrying handle (3) is designed as a rotary-pivotal moulded handle.

4. Drilling-water filter according to one of Claims 1 to 3, **characterised in that** a control means (8) is positively connected to a rotary-transposable carrying-handle axis (A) which is controllably connected to at least one self-cleaning medium.

5. Drilling-water filter according to Claim 4, **characterised in that** in the control means (8) is arranged a permanent magnet (9) the controllably associated Hall sensor (10) of which causes, via an electrically controllable flush-back valve (11) flush-back of the filter insert (6) with liquid from a pre-pressurised flush-back chamber (12).

6. Drilling-water filter according to one of Claims 1 to 5, **characterised in that** the control means (8) is a drive means (13) which mechanically drives a cleaning means (15).

7. Drilling-water filter according to Claim 6, **characterised in that** a drive means (13) is a resiliently pretensioned detent mechanism which in a mechanical rotary-transposable manner engages peripheral detent cutouts (14) of the cleaning means (15).

8. Drilling-water filter according to Claim 4, **characterised in that** the cleaning means (15) is designed as a rotary brush (17) with inwardly oriented bristles (17a) which is coaxially rotary on the outer cylinder casing of the filter insert (6).

9. Method of self-cleaning a transportable drilling-water filter (1), **characterised in that** during conversion of the drilling-water filter (1) the carrying handle (3) is transposed step by step, and in a first step mechanical cleaning is caused, and flush-back is caused in a subsequent second step.

## Revendications

1. Filtre à eau de forage avec un récipient de filtre (2), un couvercle (3) et un élément filtrant (6) implanté sur le segment d'écoulement compris entre une entrée (4) et une sortie (5) pour séparer les matières solides du liquide, **caractérisé en ce que**, pour le transport du filtre à eau de forage, le couvercle (3) comporte une poignée de manutention mobile (7) qui est reliée de manière commandée à au moins un moyen d'autonettoyage.

2. Filtre à eau de forage selon la revendication 1, **caractérisé en ce que** la poignée de manutention (3) peut s'éloigner du centre de gravité (S) par pivotement.

3. Filtre à eau de forage selon la revendication 2, **caractérisé en ce que** la poignée de manutention (3) est conçue sous la forme d'une poignée en étrier pivotante.

4. Filtre à eau de forage selon une des revendications 1 à 3, **caractérisé en ce qu'**à un axe tournant de poignée de manutention (A) est solidarisé en rotation un moyen de commande (8) qui est relié de manière commandée à au moins un moyen d'autonettoyage.

5. Filtre à eau de forage selon la revendication 4, **caractérisé en ce que** dans le moyen de commande (8) est disposé un aimant permanent (9) dont le capteur Hall (10) associé de manière commandée provoque, par l'intermédiaire d'une soupape de rétrolavage à commande électrique (11), un rétrolavage de l'élément filtrant (6) avec du liquide provenant d'une chambre de rétrolavage précontrainte en pression (12).

6. Filtre à eau de forage selon une des revendications 1 à 5, **caractérisé en ce que** le moyen de commande (8) comporte un moyen d'entraînement (13) qui entraîne mécaniquement un moyen de décolmatage (15).

7. Filtre à eau de forage selon la revendication 6, **caractérisé en ce que** le moyen d'entraînement (13) est un mécanisme de crantage précontraint élastiquement qui s'engage dans des évidements de crantage périphériques (14) du moyen de décolmatage (15) pour faire tourner mécaniquement ce dernier.

8. Filtre à eau de forage selon la revendication 4, **caractérisé en ce que** le moyen de décolmatage (15) est conçu sous la forme d'une brosse (17) pourvue de soies (17a) orientées vers l'intérieur et pouvant tourner coaxialement contre l'enveloppe extérieure cylindrique de l'élément filtrant (6).

9. Procédé d'autonettoyage d'un filtre à eau de forage transportable (1), **caractérisé en ce que**, lors du renversement du filtre à eau de forage (1), la poignée de manutention (3) est déplacée en plusieurs temps, dans un premier temps se produisant un décolmatage mécanique et dans un second temps ultérieur se produisant un rétrolavage.
